# EUROPÄISCHE PATENTSCHRIFT

(11) **EP 4 222 529 B1**
(45) Veröffentlichungstag und Bekanntmachung des Hinweises auf die Patenterteilung: **25.02.2026**
(21) Anmeldenummer: 21770033.5
(22) Anmeldetag: 08.09.2021
(51) Int. Cl.: G01S 13/931, G01S 13/75, G01S 13/87, B60W 30/165

(54) **ORTUNG VON FAHRZEUGEN MITTELS RADARREFLEKTOREN**
LOCATING VEHICLES BY MEANS OF RADAR REFLECTORS
LOCALISATION DE VÉHICULES AU MOYEN DE RÉFLECTEURS RADAR

(30) Priorität: 29.09.2020 DE 102020212232
(43) Veröffentlichungstag der Anmeldung: 09.08.2023
(73) Patentinhaber: ZF Friedrichshafen AG, 88046 Friedrichshafen (DE)
(72) Erfinder: BIEL, Steffen, 88046 Friedrichshafen (DE); TRAUB, Stefan, 88048 Friedrichshafen (DE)
(74) Vertreter: ZF Friedrichshafen AG
(86) Internationale Anmeldenummer: PCT/EP2021/074702
(87) Internationale Veröffentlichungsnummer: WO 2022/069172

(56) Entgegenhaltungen:
- DE-A1- 102017 220 004
- US-A- 4 249 176
- US-A1- 2019 243 378

## Beschreibung

Die Erfindung betrifft eine Anordnung nach dem Oberbegriff von Anspruch 1 und ein Verfahren nach dem Oberbegriff von Anspruch 9.

Zur Bearbeitung landwirtschaftlicher Flächen müssen häufig verschiedene landwirtschaftliche Nutzfahrzeuge in gleichbleibenden Abständen nebeneinander oder hintereinander herfahren. Beispielsweise muss ein Traktor mit einem entsprechenden Anhänger neben einem Mähdrescher herfahren, um dessen Auswurf zu sammeln.

Die Druckschriften DE 10 2016 216 251 A1, DE 10 2017 209 591 A1 und

DE 10 2005 019 269 B4 offenbaren Straßenfahrzeuge, die mit Radarreflektoren versehen sind. Die Radarreflektoren dienen dazu, die Abmessungen und die Art des Fahrzeugs zu bestimmen.

Auch die Druckschrift US 6 120 154 A1 bezieht sich Straßenfahrzeuge mit Radarreflektoren bekannt. Es wird ein Verfahren offenbart, anhand von Reflexionen der Radarreflektoren eines vorausfahrenden Fahrzeugs dessen Abstand zu einem hinterherfahrenden Fahrzeug zu bestimmen.

Aus dem Stand der Technik sind ferner radarbasierte Abstandsregeltempomaten bekannt. Diese ermitteln radarbasiert den Abstand zu einem vorausfahrenden Fahrzeug, um die Geschwindigkeit des nachfolgenden Fahrzeugs zu steuern. Zur Spurführung orientiert sich das nachfolgende Fahrzeug an Fahrbahnmarkierungen oder sonstigen optisch erkennbaren Begrenzungen der Fahrspur.

US 4 249 176 A betrifft ein Abstandsmesskommunikationssystem, bei dem ein Messfahrzeug in die Lage versetzt wird, seinen Abstand zu einem Fahrzeug zu messen, der für eine sichere Fahrt desselben erforderlich ist und der den Informationsaustausch zwischen den Fahrzeugen ermöglicht. US 6 081 223 A offenbart ein Fahrzeug mit einem Millimeterwellenradar, mit dem nicht nur eine Entfernung und eine Relativgeschwindigkeit zu einem Objekt erfasst werden kann, sondern auch Verkehrsinformationen verschiedener Art oder eine Vielzahl von Informationen, die das Objekt hat oder die zuvor dem Objekt gegeben wurden, erfasst werden können. DE 10 2016 216 251 A1 betrifft ein Kraftfahrzeug, insbesondere einen Personenkraftwagen und/oder einen Lastkraftwagen, zur Beförderung von Personen und/oder Lasten im Straßenverkehr. Daneben betrifft die Erfindung ein Verfahren zur Ermittlung einer Ausdehnung eines Fremdfahrzeugs in einem wenigstens einen Radarsensor aufweisenden Ego-Kraftfahrzeug. DE 10 2017 220 004 A1 beschreibt ein Verfahren und Fahrerassistenzsystem zum Regeln der Fahrdynamik eines Folgefahrzeugs, welches einem Leitfahrzeug folgt, mit Bestimmen eines Abstands zwischen dem Folgefahrzeug und dem Leitfahrzeug und Bestimmen eines Richtungswinkels vom Folgefahrzeug zum Leitfahrzeug und Regeln der Querdynamik des Folgefahrzeugs anhand des Abstands und des Richtungswinkels. Aus US 2019/ 243 378 A1 ist ein computergestütztes System an Bord eines Fahrzeugs zur automatischen radarbasierten Fahrzeugführung bekannt, welches ein nach vorne gerichtetes Radarsensormodul umfasst. Die Radarwellen werden von einer Reihe von Radarreflektoren reflektiert, die an der Seite einer Fahrbahn in einem Abstand vor dem Fahrzeug auf der Fahrbahn platziert sind.

Die aus dem Stand der Technik bekannten Lösungen lassen sich in der Landwirtschaft nicht einsetzen, da es auf landwirtschaftlichen Flächen keine Fahrspuren gibt.

Der Erfindung liegt die Aufgabe zugrunde, die autonome Steuerung von Fahrzeugkolonnen abseits befestigter Wege zu verbessern. Diese Aufgabe wird gelöst durch eine Anordnung nach Anspruch 1 und ein Verfahren nach Anspruch 9. Bevorzugte Weiterbildungen sind in den Unteransprüchen enthalten und ergeben sich aus nachfolgender Beschreibung sowie den in den Figuren dargestellten Ausführungsbeispielen.

Die erfindungsgemäße Anordnung umfasst eine Datenverarbeitungsvorrichtung, ein erstes Fahrzeug
und ein zweites Fahrzeug. Die Datenverarbeitungsvorrichtung ist bevorzugt Teil des zweiten Fahrzeugs. Alternativ kann die Datenverarbeitungsvorrichtung außerhalb des zweiten Fahrzeugs angeordnet sein und über eine vorzugsweise drahtlose Verbindung zur Datenübertragung mit dem zweiten Fahrzeug verbunden sein.

Das zweite Fahrzeug weist einen Radarsensor auf. Dies ist ein Sensor der ausgebildet ist, Radarstrahlung zu empfangen und in ein Signal umzuwandeln.

Bevorzugt weist das zweite Fahrzeug darüber hinaus auch einen Radarsender auf.

Dieses ist ein Mittel zum Aussenden der Radarstrahlung. Der Radarsensor ist vorzugsweise ausgebildet, Radarstrahlung, die von dem Radarsender ausgesendet und von einem Objekt reflektiert wurde, zu empfangen.

An dem ersten Fahrzeug sind paarweise angeordnete Radarreflektoren angebracht. Dies ist ein Mittel zum Reflektieren von Radarstrahlung. Die Radarreflektoren sind ausgebildet, die von dem Radarsender ausgesendete Radarstrahlung zu reflektieren.

Geeignete Radarreflektoren sind aus dem Stand der Technik bekannt. Vorzugsweise kommen ein oder mehrere an dem ersten Fahrzeug angebrachte Winkelreflektoren zum Einsatz.

Die Datenverarbeitungsvorrichtung ist ausgebildet, in dem Signal des mindestens einen Radarsensors die an dem ersten Fahrzeug angebrachten Radarreflektoren bzw. deren Reflexionen zu erkennen. Im Einzelnen bedeutet dies, dass die Datenverarbeitungsvorrichtung ausgebildet ist, Teile des Signals, die von Reflexionen der Radarreflektoren herrühren, von anderen Teilen des Signals abzugrenzen. Geeignete Verfahren dazu sind aus dem Stand der Technik bekannt.

Erfindungsgemäß ist die Datenverarbeitungsvorrichtung ausgebildet, die paarweise angeordneten Radarreflektoren mittels des Signals zu orten. Dies bedeutet, dass die Datenverarbeitungsvorrichtung das Signal der Radarreflektoren verwendet, um den Ort der Radarreflektoren zu bestimmen. Als Bezugssystem dient ein orts- oder bezüglich des zweiten Fahrzeugs fahrzeugfestes Bezugssystem.

Der Ort lässt sich in dem Bezugssystem durch Festlegung von drei Ortskoordinaten bestimmen. Ist der Untergrund, auf dem die Fahrzeuge fahren, eben, ist eine der drei Koordinaten bereits durch den Untergrund festgelegt. In diesem Fall beschränkt sich die Erfindung auf die Bestimmung der übrigen zwei Ortskoordinaten.

Die Erfindung eignet sich zur Ortung abseits befestigter Wege. Entsprechend kann es sich bei dem ersten Fahrzeug und dem zweiten Fahrzeug um Landmaschinen oder Baumaschinen handeln.

Erfindungsgemäß sind an dem ersten Fahrzeug mindestens zwei Radarreflektoren angebracht. Die Datenverarbeitungsvorrichtung ist entsprechend weitergebildet, die mindestens zwei Radarreflektoren mittels des Signals zu orten. Die mindestens zwei Radarreflektoren sind von Vorteil, da sich deren Abstand auswerten lässt. Dies vereinfacht die Ortung.

In einer darüber hinaus bevorzugten Weiterbildung ist die Datenverarbeitungsvorrichtung ausgebildet, das erste Fahrzeug zu orten. Die Ortung des ersten Fahrzeugs, das heißt die Bestimmung von dessen Ort bzw. Ortskoordinaten ergibt sich direkt aus der Ortung der Radarreflektoren.

Neben dem Ort wird in einer bevorzugten Weiterbildung auch die Lage der Radarreflektoren mittels des Signals des mindestens einen Radarsensors mindestens teilweise durch die Datenverarbeitungsvorrichtung bestimmt. Die Lage der Radarreflektoren bezeichnet deren Winkellage bzw. Orientierung im Raum. Die Lage wird bevorzugt im selben Bezugssystem bestimmt, in dem die Radarreflektoren auch geortet werden.

Die Lage der Radarreflektoren ist durch drei Winkel festgelegt. Zwei der Winkel sind durch den Untergrund bestimmt, auf dem das erste Fahrzeug und das zweite Fahrzeug fahren. Ist der Untergrund eben, sind die zwei Winkel konstant, sodass die weiterbildungsgemäße Bestimmung eines einzigen Lagewinkels jedes Radarreflektors ausreichend ist.

Bevorzugt ist die Datenverarbeitungsvorrichtung weitergebildet, eine Lage des ersten Fahrzeugs mindestens teilweise zu bestimmen. Die Lage des ersten Fahrzeugs ergibt sich direkt aus der Lage der Radarreflektoren.

Soll das zweite Fahrzeug dem ersten Fahrzeug folgen, ist eine einzige Ortung und gegebenenfalls Bestimmung der Lage der Radarreflektoren nicht ausreichend. In dem Fall werden die Radarreflektoren weiterbildungsgemäß wiederholt mittels des Signals des Radarsensors geortet. Gegebenenfalls wird auch die Lage der Radarreflektoren mittels des Signals wiederholt bestimmt.

Eine wiederholte Ortung bzw. Bestimmung bedeutet eine Ortung bzw. Bestimmung zu einem ersten Zeitpunkt und eine erneute Ortung bzw. Bestimmung zu einem zweiten Zeitpunkt. Zu dem ersten Zeitpunkt und dem zweiten Zeitpunkt wird jeweils die von den Radarreflektoren reflektierte Radarstrahlung von dem Radarsensor aufgenommen und in ein Signal umgewandelt. Dieses wird jeweils von der Datenverarbeitungsvorrichtung zur Ortung und gegebenenfalls Lagebestimmung ausgewertet.

Vorzugsweise erfolgt die Ortung und gegebenenfalls Lagebestimmung darüber hinaus kontinuierlich, das heißt in fortlaufender Folge.

Die wiederholte Ortung und gegebenenfalls Lagebestimmung ermöglicht es der Datenverarbeitungsvorrichtung in einer bevorzugten Weiterbildung, eine Trajektorie der Radarreflektoren zu bestimmen. Eine Trajektorie ist eine Raumkurve, entlang der sich ein Objekt bewegt.

Aus der Trajektorie der Radarreflektoren ergibt sich unmittelbar eine Trajektorie des ersten Fahrzeugs. Diese wird in einer bevorzugten Weiterbildung durch die Datenverarbeitungsvorrichtung bestimmt.

Mittels der Trajektorie der Radarreflektoren oder des ersten Fahrzeugs lässt sich das zweite Fahrzeug so steuern, dass es dem ersten Fahrzeug in gleichbleibendem Abstand folgt. Die Datenverarbeitungsvorrichtung ist entsprechend weitergebildet, das zweite Fahrzeug entlang der Trajektorie der Radarreflektoren oder des ersten Fahrzeugs zu steuern. Dies bedeutet, dass das zweite Fahrzeug von der Datenverarbeitungsvorrichtung so gesteuert wird, dass seine Trajektorie parallel zu der Trajektorie der Radarreflektoren oder des ersten Fahrzeugs verläuft. In einer nicht erfindungsgemäßen Ausführungsform kann das zweite Fahrzeug so gesteuert werden, dass die Trajektorie des mindestens einen Radarreflektors oder des ersten Fahrzeugs und die Trajektorie des zweiten Fahrzeugs deckungsgleich sind. Das zweite Fahrzeug folgt dann exakt dem ersten Fahrzeug.

Bei dem oben beschriebenen, von der Datenverarbeitungsvorrichtung der erfindungsgemäßen Anordnung ausgeführten Verfahren handelt es sich um ein erfindungsgemäßes Verfahren. Eine erfindungsgemäße Datenverarbeitungsvorrichtung ist zur Ausführung dieses Verfahrens angepasst. Dies ist etwa dann der Fall, wenn ein Computerprogramm auf einem Datenträger der Datenverarbeitungsvorrichtung enthalten ist. Das Computerprogramm wiederum ist ausgebildet, die Datenverarbeitungsvorrichtung zur Ausführung des erfindungsgemäßen Verfahrens zu veranlassen.

Ausführungsbeispiele sind in den Figuren dargestellt. Übereinstimmende Bezugsziffern kennzeichnen dabei gleiche oder funktionsgleiche Merkmale. Im Einzelnen zeigt:
Fig. 1 zwei hintereinanderfahrende Fahrzeuge in einer nicht erfindungsgemäßen Ausführungsform; und
Fig. 2 zwei nebeneinanderfahrende Fahrzeuge in einer erfindungsgemäßen Ausführungsform.

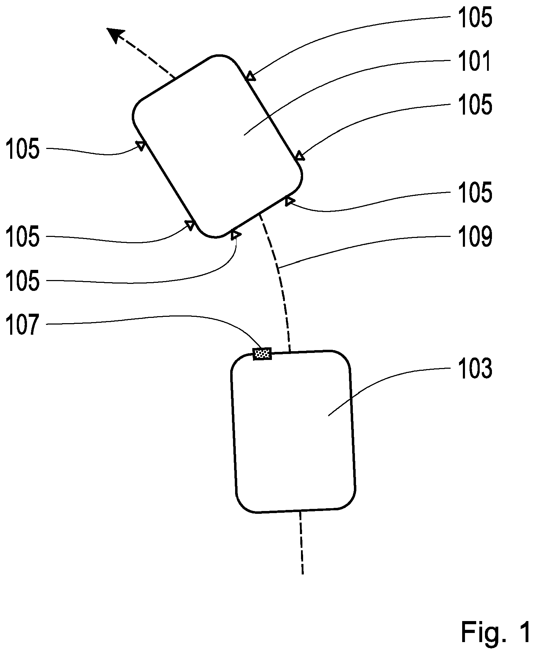

In Fig. 1 sind ein erstes Fahrzeug 101 und ein zweites Fahrzeug 103 dargestellt. Das erste Fahrzeug 101 ist mit Winkelreflektoren 105 versehen. Die Winkelreflektoren 105 sind paarweise an den Seiten und am Heck des ersten Fahrzeugs 101 angeordnet.

Das zweite Fahrzeug 103 weist eine Radareinheit 107 auf. Diese beinhaltet einen Sender und einen Empfänger. Von dem Sender ausgesendete Radarstrahlen werden von den Winkelreflektoren 105 reflektiert und von dem Empfänger erfasst. Dadurch ist das zweite Fahrzeug 103 in der Lage, das erste Fahrzeug 105 exakt zu orten und ihm in gleichbleibendem Abstand zu folgen. Das erste Fahrzeug 105 und das zweite Fahrzeug 103 bewegen sich dabei entlang einer übereinstimmenden Trajektorie 109.

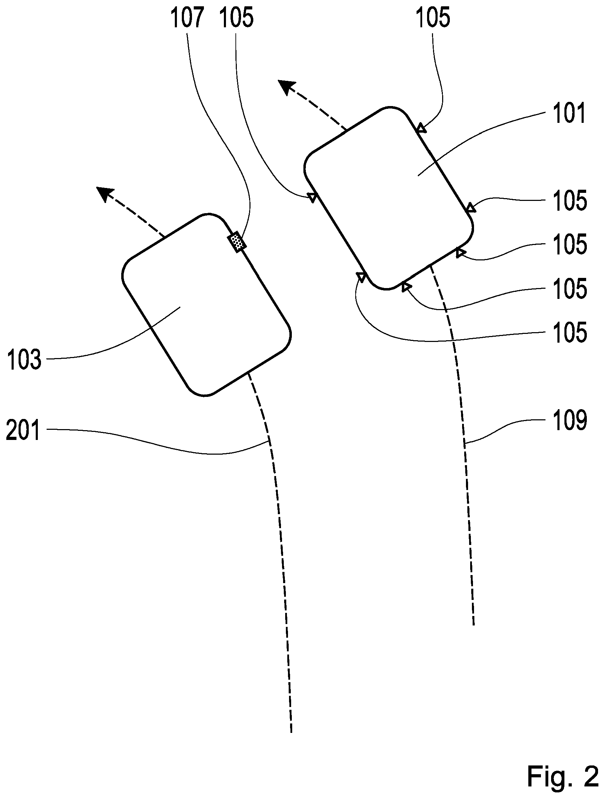

Gemäß Fig. 1 ist die Radareinheit 107 an der Front des zweiten Fahrzeugs 103 angebracht. Fig. 2 zeigt eine erfindungsgemäße Anbringung der Radareinheit 107 an der Seite des zweiten Fahrzeugs 103. Dies ermöglicht es dem zweiten Fahrzeug 103, entlang einer Trajektorie 201 zu fahren, die parallel zu der Trajektorie 109 des ersten Fahrzeugs verläuft. Das zweite Fahrzeug 103 fährt dabei in gleichbleibendem Abstand neben dem ersten Fahrzeug 101 her.

### Bezugszeichen

- 101: erstes Fahrzeug
- 103: zweites Fahrzeug
- 105: Winkelreflektor
- 107: Radareinheit
- 109: Trajektorie
- 201: Trajektorie

## Patentansprüche

1. Anordnung mit einer Datenverarbeitungsvorrichtung, einem ersten Fahrzeug (101) und einem zweiten Fahrzeug (103), das einen Radarsensor (107) aufweist; wobei
die Datenverarbeitungsvorrichtung ausgebildet ist, paarweise angeordnete Radarreflektoren (105), die an dem ersten Fahrzeug (101) angebracht sind, in einem Signal des Radarsensors (107) zu erkennen; wobei
die Datenverarbeitungsvorrichtung ausgebildet ist, die paarweise angeordneten Radarreflektoren (105) mittels des Signals zu orten; **dadurch gekennzeichnet, dass** der Radarsensor (107) an der Seite des zweiten Fahrzeugs (103) angebracht ist und die Radarreflektoren (105) paarweise an den Seiten und am Heck des ersten Fahrzeugs (101) angeordnet sind.

2. Anordnung nach Anspruch 1; **dadurch gekennzeichnet, dass**
die Datenverarbeitungsvorrichtung ausgebildet ist, das erste Fahrzeug (101) zu orten.

3. Anordnung nach einem der vorhergehenden Ansprüche; **dadurch gekennzeichnet, dass**
die Datenverarbeitungsvorrichtung ausgebildet ist, eine Lage der Radarreflektoren (105) mittels des Signals mindestens teilweise zu bestimmen.

4. Anordnung nach dem vorhergehenden Anspruch; **dadurch gekennzeichnet, dass** die Datenverarbeitungsvorrichtung ausgebildet ist, eine Lage des ersten Fahrzeugs (101) mindestens teilweise zu bestimmen.

5. Anordnung nach einem der vorhergehenden Ansprüche; **dadurch gekennzeichnet, dass**
die Datenverarbeitungsvorrichtung ausgebildet ist, die Radarreflektoren (105) wiederholt zu orten und/oder deren Lage wiederholt zu bestimmen.

6. Anordnung nach dem vorhergehenden Anspruch; **dadurch gekennzeichnet, dass** die Datenverarbeitungsvorrichtung ausgebildet ist, eine Trajektorie der Radarreflektoren (105) zu bestimmen.

7. Anordnung nach dem vorhergehenden Anspruch; **dadurch gekennzeichnet, dass** die Datenverarbeitungsvorrichtung ausgebildet ist, eine Trajektorie (109) des ersten Fahrzeugs (101) zu bestimmen.

8. Anordnung nach einem der vorhergehenden zwei Ansprüche; **dadurch**
**gekennzeichnet, dass**
die Datenverarbeitungsvorrichtung ausgebildet ist, das zweite Fahrzeug (103) entlang einer Trajektorie (201) zu steuern, wobei die Trajektorie (201) parallel zu der Trajektorie (109) des ersten Fahrzeugs (101) verläuft.

9. Verfahren unter Verwendung einer Anordnung nach einem der vorherigen Ansprüche und eines Signals eines Radarsensors (107), der an der Seite von einem zweiten Fahrzeug (103) angebracht ist; wobei
paarweise an den Seiten und am Heck eines ersten Fahrzeugs (101) angeordnete Radarreflektoren (105) in dem Signal erkannt werden; wobei die Radarreflektoren (105) mittels des Signals geortet werden, **dadurch gekennzeichnet, dass** mittels der Radarreflektoren (105) eine Trajektorie (109) des ersten Fahrzeugs (101) bestimmt wird und das zweite Fahrzeug (103) entlang einer Trajektorie (201) gesteuert wird,
wobei diese Trajektorie (201) parallel zu der Trajektorie (109) des ersten Fahrzeugs (101) verläuft.

## Claims

1. Arrangement comprising a data processing device, a first vehicle (101), and a second vehicle (103) having a radar sensor (107); wherein
the data processing device is designed to identify radar reflectors (105), which are arranged in pairs and are mounted on the first vehicle (101), in a signal from the radar sensor (107); wherein
the data processing device is designed to locate the radar reflectors (105), which are arranged in pairs, by means of the signal; **characterized in that** the radar sensor (107) is mounted on the side of the second vehicle (103) and the radar reflectors (105) are arranged in pairs on the sides and at the rear of the first vehicle (101).

2. Arrangement according to Claim 1; **characterized in that**
the data processing device is designed to locate the first vehicle (101).

3. Arrangement according to either one of the preceding claims; **characterized in that**
the data processing device is designed to at least partially determine a position of the radar reflectors (105) by means of the signal.

4. Arrangement according to the preceding claim; **characterized in that**
the data processing device is designed to at least partially determine a position of the first vehicle (101).

5. Arrangement according to any one of the preceding claims; **characterized in that**
the data processing device is designed to repeatedly locate the radar reflectors (105) and/or to repeatedly determine their position.

6. Arrangement according to the preceding claim; **characterized in that**
the data processing device is designed to determine a trajectory of the radar reflectors (105).

7. Arrangement according to the preceding claim; **characterized in that**
the data processing device is designed to determine a trajectory (109) of the first vehicle (101).

8. Arrangement according to either one of the two preceding claims; **characterized in that**
the data processing device is designed to control the second vehicle (103) along a trajectory (201), wherein the trajectory (201) runs parallel to the trajectory (109) of the first vehicle (101).

9. Method using an arrangement according to any one of the preceding claims and a signal from a radar sensor (107) mounted on the side of a second vehicle (103); wherein
radar reflectors (105) arranged in pairs at the sides and at the rear of a first vehicle (101) are identified in the signal; wherein the radar reflectors (105) are located by means of the signal, **characterized in that** a trajectory (109) of the first vehicle (101) is determined by means of the radar reflectors (105) and the second vehicle (103) is controlled along a trajectory (201), wherein this trajectory (201) runs parallel to the trajectory (109) of the first vehicle (101).

## Revendications

1. Ensemble comprenant un dispositif de traitement de données, un premier véhicule (101) et un deuxième véhicule (103) qui comporte un capteur radar (107) ;
le dispositif de traitement de données étant conçu pour identifier des réflecteurs radar (105) disposés par paires, qui sont montés sur le premier véhicule (101), dans un signal du capteur radar (107) ;
le dispositif de traitement de données étant conçu pour localiser les réflecteurs radar (105) disposés par paires au moyen du signal ; **caractérisé en ce que** le capteur radar (107) est monté sur le côté du deuxième véhicule (103) et les réflecteurs radar (105) sont disposés par paires sur les côtés et à l'arrière du premier véhicule (101).

2. Ensemble selon la revendication 1 ; **caractérisé en ce que**
le dispositif de traitement de données est conçu pour localiser le premier véhicule (101).

3. Ensemble selon l'une des revendications précédentes ; **caractérisé en ce que**
le dispositif de traitement de données est conçu pour déterminer au moins partiellement une position des réflecteurs radar (105) au moyen du signal.

4. Ensemble selon la revendication précédente ; **caractérisé en ce que**
le dispositif de traitement de données est conçu pour déterminer au moins partiellement une position du premier véhicule (101).

5. Ensemble selon l'une des revendications précédentes ; **caractérisé en ce que**
le dispositif de traitement de données est conçu pour localiser de façon répétée les réflecteurs radar (105) et/ou pour déterminer de façon répétée leur position.

6. Ensemble selon la revendication précédente ; **caractérisé en ce que**
le dispositif de traitement de données est conçu pour déterminer une trajectoire des réflecteurs radar (105).

7. Ensemble selon la revendication précédente ; **caractérisé en ce que**
le dispositif de traitement de données est conçu pour déterminer une trajectoire (109) du premier véhicule (101).

8. Ensemble selon l'une des deux revendications précédentes ; **caractérisé en ce que**
le dispositif de traitement de données est conçu pour commander le deuxième véhicule (103) le long d'une trajectoire (201), la trajectoire (201) s'étendant parallèlement à la trajectoire (109) du premier véhicule (101).

9. Procédé utilisant un ensemble selon l'une des revendications précédentes et un signal d'un capteur radar (107) monté sur le côté d'un deuxième véhicule (103) ;
des réflecteurs radar (105) disposés par paires sur les côtés et à l'arrière d'un premier véhicule (101) étant identifiés dans le signal ; les réflecteurs radar (105) étant localisés au moyen du signal, **caractérisé en ce qu'**au moyen des réflecteurs radar (105), une trajectoire (109) du premier véhicule (101) est déterminée et le deuxième véhicule (109) est commandé le long d'une trajectoire (101), ladite trajectoire (201) s'étendant parallèlement à la trajectoire (103) du premier véhicule (201) .
